# EUROPÄISCHE PATENTSCHRIFT

(11) **EP 1 730 800 B1**
(45) Veröffentlichungstag und Bekanntmachung des Hinweises auf die Patenterteilung: **07.05.2008**
(21) Anmeldenummer: 05729816.8
(22) Anmeldetag: 17.03.2005
(51) Int. Cl.: H01M 4/02

(54) **NANOSKALIGE SILIZIUMPARTIKEL IN NEGATIVEN ELEKTRODENMATERIALIEN FÜR LITHIUM-IONEN-BATTERIEN**
NANOSCALAR SILICON PARTICLES IN NEGATIVE ELECTRODE MATERIALS FOR USE IN LITHIUM-ION BATTERIES
PARTICULES DE SILICIUM NANOSCALAIRES CONTENUES DANS DES MATERIAUX D'ELECTRODES NEGATIVES DESTINES A DES BATTERIES A IONS LITHIUM

(30) Priorität: 01.04.2004 DE 102004016766
(43) Veröffentlichungstag der Anmeldung: 13.12.2006
(73) Patentinhaber: Evonik Degussa GmbH, 40474 Düsseldorf (DE)
(72) Erfinder: PETRAT, Frank-Martin, 48151 Münster (DE); HENNIGE, Volker, 48249 Dülmen (DE); ALBRECHT, Evelyn, 45657 Recklinghausen (DE); LEE, David, Belle Mead, New Jersey 08502 (US); BUQA, Hilmi, CH-5200 Brugg (CH); HOLZAPFEL, Michael, CH-5200 Brugg (CH); NOVÁK, Petr, CH-5200 Brugg (CH)
(86) Internationale Anmeldenummer: PCT/EP2005/051238
(87) Internationale Veröffentlichungsnummer: WO 2005/096414

(56) Entgegenhaltungen:
- J.YANG ET AL: "Si/C Composites for High Capacity Lithium Storage Materials" ELECTROCHEMICAL AND SOLID-STATE LETTERS, Bd. 6, Nr. 8, 1. August 2003 (2003-08-01), Seiten A154-A156, XP002436965 US in der Anmeldung erwähnt
- J.GRAETZ ET AL: "Highly Reversible Lithium Storage in Nanostructured Silicon" ELECTROCHEMICAL AND SOLID-STATE LETTERS, Bd. 6, Nr. 9, 1. September 2003 (2003-09-01), Seiten A194-A197, XP002436966 us in der Anmeldung erwähnt

## Beschreibung

Die Erfindung betrifft ein Elektrodenmaterial und dessen Verwendung in Lithium-Ionen-Batterien.

Lithium-Ionen-Batterien sind technisch sehr interessante Energiespeichersysteme, da sie unter den bekannten, praktisch verwendbaren chemischen und elektrochemischen Energiespeichern die höchste Energiedichte von bis zu 180 Wh/kg aufweisen. Ihre Anwendung finden die Lithium-Ionen-Batterien vor allem im Bereich der tragbaren Elektronik, wie beispielsweise Laptops oder Mobiltelefonen, sogenannten Handys. Auch eine Anwendung der Lithium-Ionen-Batterien im Bereich der Fortbewegungsmittel, wie beispielsweise Fahrräder oder Automobile, wird bereits diskutiert.

Als negatives Elektrodenmaterial ("Anode") findet vor allem graphitischer Kohlenstoff seine Anwendung. Der graphitische Kohlenstoff zeichnet sich durch seine stabilen Zykleneigenschaften und seine, im Vergleich zu Lithiummetall, das in so genannten "Lithiumbatterien" zum Einsatz kommt, recht hohe Handhabungssicherheit aus. Ein wesentliches Argument für die Verwendung von graphitischem Kohlenstoff in negativen Elektrodenmaterialien liegt in den geringen Volumenänderungen des Wirtsmaterials, die mit der Ein- und Auslagerung von Lithium verbunden sind, d.h. die Elektrode bleibt annähernd stabil. So lässt sich für die Lithiumeinlagerung in graphitischem Kohlenstoff nur eine Volumenzunahme von ca. 10 % für die Grenzstöchiometrie von LiC₆ messen. Nachteilig ist jedoch das sehr niedrige Potential von ca. 100-200 mV vs. Li/Li⁺ des graphitischen Kohlenstoffs. Ein weiterer Nachteil des graphitischen Kohlenstoffs ist hingegen seine relativ niedrige elektrochemische Kapazität von theoretisch: 372 mAh/g Graphit, die etwa nur ein Zehntel, der mit Lithiummetall theoretisch erreichbaren elektrochemischen Kapazität von 4235 mAh/g Lithium entspricht.

Seit langem wird deshalb nach alternativen Materialien geforscht, v.a. im Bereich der Legierungen, wie beispielsweise binären Legierungen auf der Basis von Aluminium (Lindsay et al. in J. Power Sources 119 (2003), 84), Zinn (Winter et al. in Electrochim. Acta 45 (1999), 31; Tirado in Mater. Sci. Eng. R-Rep. 40 (2003), 103) oder Antimon (Tirado in Mater. Sci. Eng. R-Rep. 40 (2003), 103), ternären Legierungen auf der Basis von Kupfer-Zinn (Kepler et al. in Electrochem Solid-State Lett 2 (1999), 307) oder Kupfer-Antimon (Yang et al. in Electrochem. Solid State Lett. 2 (1999), 161) oder Metalloxiden auf der Basis von Zinnoxid (Huggins in Solid State Ion. 152 (2002), 61). Diese Materialien haben hohe theoretische spezifische Kapazitäten von beispielsweise 994 mAh/g im Falle von Zinn. Könnte man diese hohen theoretischen Kapazitäten reversibel nutzen, wäre eine deutliche Erhöhung der Energiedichte von Lithium-Ionen-Batterien möglich.

Anodenmaterialien auf der Basis von Legierungen bieten im Vergleich zu metallischem Lithium den Vorteil, dass es nicht zur Dendritenbildung bei der Lithiumabscheidung kommt. Im Gegensatz zu Graphitmaterialien eignen sich Anodenmaterialien auf der Basis von Legierungen für den Einsatz zusammen mit Elektrolyten auf der Basis von Propylencarbonat. Dies ermöglicht die Anwendung von Lithium-Ionen-Batterien bei niedrigen Temperaturen. Der Nachteil dieser Legierungen ist allerdings die große Volumenausdehnung während des Zyklens - also während des Ein- und Auslagerns des Lithiums, die über 200 % teilweise sogar bis zu 300 % beträgt (Besenhard et al. in J. Power Sources 68 (1997), 87).

Bei der Verwendung von Metalloxiden als Elektrodenmaterial findet bei der ersten Lithiumeinlagerung eine Reduktion des Metalloxids zu Metall und Lithiumoxid statt, wobei das Lithiumoxid die feinen Metallpartikel wie eine Matrix einbettet. Während der nachfolgenden Zyklen kann dadurch eine Volumenausdehnung teilweise aufgefangen werden, dies verbessert das Zyklenverhalten deutlich.

Silizium wurde ebenfalls erforscht, weil es ähnlich wie Zinn, mit Lithium binäre Verbindungen bildet, die elektrochemisch aktiv sind (Weydanz et al. in Journal of Power Sources 82 (1999), 237; Seefurth et al. in J. Electrochem. Soc. 124 (1977), 1207; Lai in J. Electrochem. Soc. 123 (1976), 1196). Diese binären Verbindungen von Lithium und Silizium weisen einen sehr hohen Lithiumgehalt auf Das theoretische Maximum an Lithiumgehalt findet man bei Li_{4.2}Si, dies entspricht einer sehr hohen theoretischen spezifischen Kapazität von ca. 4400 mAh/g Silizium (Lupu et al. in Inorg. Chem. 42 (2003), 3765). Diese binären Verbindungen bilden sich bei einem ähnlich niedrigen Potential wie die Einlagerungsverbindungen von Lithium in Graphit bei < 500 mV vs. Li/Li⁺ (d.h. gegenüber dem Potential von metallischem Lithium, welches als Referenz dient). Wie bei den oben genannten binären Legierungen ist auch im Falle des Siliziums die Ein- und Auslagerung von Lithium mit einer sehr starken Volumenausdehnung verbunden, die bei maximal 323 % liegt. Diese Volumenausdehnung führt zu einer starken mechanischen Belastung der Kristallite und dadurch zu einer Amorphisierung und einem Auseinanderbrechen der Partikel unter Verlust des elektrischen Kontakts (Winter et al. in Adv. Mater. 10 (1998), 725; Yang et al. in Solid State Ion. 90 (1996), 281; Bourderau et al. in J. Power Sources 82 (1999), 233).

Um die Haftung des Siliziums am Trägermaterial zu verbessern, werden verschiedene Techniken eingesetzt, wie beispielsweise mehrstündiges intensives Vermahlen (Dimov et al. in Electrochim. Acta 48 (2003), 1579; Niu et al. in Electrochem Solid State Lett. 5 (2002), A107), Carbon-Coating aus der Gasphase (Wilson et al. in J. Electrochem. Soc. 142 (1995), 326), und Pyrolyse eines innigen Gemischs der jeweiliger Precursoren (Larcher et al. in Solid State Ion. 122 (1999), 71; Wen et al. in Electrochem. Commun 5 (2003), 165). Dabei wird sowohl mit siliziumreichen (60-80 Gew.-% Si), als auch siliziumarmen (5-20 Gew.-% Si) Formulierungen experimentiert.

Experimente mit nanoskaligen Materialien, d. h. einer Partikelgröße von ca. 10O nm, beschreiben Graetz et al. in Electrochem. Solid State Lett. 6 (2003), A194; Li et al. in Electrochem. Solid State Lett. 2 (1999), 547, Yang et al. in Electrochem Solid State Lett. 6 (2003), A154 und Gao et al. in Adv. Mater. 13 (2001), 816. Graetz et al. beschreiben die Darstellung von nanoskaligen Siliziumfilmen, welche eine reversible Kapazität von mehr als 2300 mAh/g (im Falle eines mittels Chemical Vapor Deposition abgeschiedenen Films) bzw. 1100 mAh/g (im Falle des auf Partikeln aufbauenden Films) zeigen, allerdings ist das Fading relativ hoch. Li et al. benutzen ein Gemisch aus nanoskaligem Silizium und Ruß, welches ebenfalls eine sehr hohe Kapazität von anfänglich bis über 2000 mAh/g zeigt, die allerdings über das Zyklen deutlich abfällt und es sind weniger als 25 Zyklen gezeigt. Yang et al. benutzen die Pyrolyse eines nano-Silizium-haltigen Ausgangsgemisches zur Herstellung ihrer aktiven Materialien und erhalten reversible Kapazitäten von über 700 mAh/g während 30 Zyklen, aber auch hier konnte das Fading nicht vermieden werden. Gao et al. beschreiben die elektrochemische Reaktion von durch Laserablation erhaltenem Silizium mit Lithium, erhalten aber eine reversible Kapazität von anfänglich um die 700 mAh/g.

Aufgabe der vorliegenden Erfindung war es, ein Elektrodenmaterial bereitzustellen, das eine hohe reversible Kapazität aufweist, wobei vorzugsweise gleichzeitig ein geringfügiges Fading und/oder geringere irreversible Kapazitätsverlusten bei dem ersten Zyklus erreicht werden sollte. Insbesondere war es die Aufgabe ein Elektrodenmaterial zur Verfügung zu stellen, das eine ausreichende mechanische Stabilität während des Zyklens aufweist.

Unter Fading wird im Sinne dieser Erfindung der Rückgang der reversiblen Kapazität während des fortgesetzten Zyklens verstanden.

Überraschenderweise wurde gefunden, das s ein Elektrodenmaterial, das nanoskalige Siliziumpartikel, die eine BET-Oberfläche von 5 bis 700 m²/g und einen mittleren Partikeldurchmesser von 5 bis 200 nm aufweisen, zu einem guten Zyklenverhalten führt, insbesondere im Vergleich zu siliziumbasierten negativen Elektroden für Lithium-Ionen-Batterien gemäß dem Stand der Technik. Die Lösung der Aufgabe war umso überraschender, zumal sich zeigte dass diese Elektroden eine sehr hohe reversible Kapazität aufweisen, die auch im Laufe des Zyklens annähernd konstant bleibt, so dass nur ein geringfügiges Fading zu beobachten ist. Ferner zeigte sich, dass durch den Einsatz dieser nanoskaligen Siliziumpartikel das Elektrodenmaterial eine deutlich verbesserte mechanische Stabilität aufweist. Ebenfalls überraschend war, dass der irreversible Kapazitätsverlust während des ersten Zyklus verringert werden konnte.

Gegenstand der Erfindung ist deshalb ein Elektrodenmaterial für Lithium-Ionen-Batterien, das sich dadurch auszeichnet, dass das Elektrodenmaterial
- 5-85 Gew.-% nanoskalige Siliziumpartikel, die eine BET-Oberfläche von 5 bis 700 m²/g und einen mittleren Primärpartikeldurchmesser von 5 bis 200 nm aufweisen,
- 0-10 Gew.-% Leitruß,
- 5 - 80 Gew.% Graphit mit einem mittleren Partikeldurchmesser von 1 µm bis 100 µm und
- 5-25 Gew.-% eines Bindemittels
aufweist, wobei die Anteile der Komponenten in Summe maximal 100 Gew.-% ergeben.

Weiterer Gegenstand der Erfindung ist die Verwendung des erfindungsgemäßen Elektrodenmaterials zur Herstellung von Lithium-Ionen-Batterien. Ferner ist Gegenstand der Erfindung eine Lithium-Ionen-Batterie mit einer negativen Elektrode, die das erfindungsgemäße Elektrodenmaterial aufweist.

Elektroden, bei denen das erfindungsgemäße Elektrodenmaterial verwendet wird, weisen eine sehr hohe reversible Kapazität auf, dies gilt sowohl für das erfindungsgemäße Elektrodenmaterial mit einem hohen Gehalt an nanoskaligen Siliziumpartikeln als auch für das erfindungsgemäße Elektrodenmaterial mit einem geringeren Gehalt an nanoskaligen Siliziumpartikeln. Diese reversible Kapazität bleibt auch im Laufe des Zyklens annähernd konstant, so dass nur ein geringfügiges Fading zu beobachten ist. Ferner weist das erfindungsgemäße Elektrodenmaterial eine gute Stabilität auf. Dies bedeutet, dass auch bei längeren Zyklen kaum Ermüdungserscheinungen, wie beispielsweise mechanische Zerstörung, des erfindungsgemäßen Elektrodenmaterials auftreten. Der irreversible Kapazitätsverlust während des ersten Zyklus kann bei der Verwendung des erfindungsgemäßen Elektrodenmaterials gegenüber entsprechenden siliziumhaltigen und auf Legierungen basierenden Elektrodenmaterialen für Lithium-Ionen-Batterien gemäß dem Stand der Technik verringert werden. Generell zeigt das erfindungsgemäße Elektrodenmaterial ein gutes Zyklenverhalten. Des Weiteren hat das erfindungsgemäße Elektrodenmaterial den Vorteil, dass eine ausreichende Stabilität gegenüber einem Elektrolyten basierend auf Propylencarbonat vorhanden ist.

Das erfindungsgemäße Elektrodenmaterial für Lithium-Ionen-Batterien, zeichnet sich dadurch aus, dass das Elektrodenmaterial
- 5-85 Gew.% nanoskalige Siliziumpartikel, die eine BET-Oberfläche von 5 bis 700 m²/g und einen mittleren Primärpartikeldurchmesser von 5 bis 200 nm aufweisen,
- 0-10 Gew.-% Leitruß,
- 5-80 Gew.% Graphit mit einem mittleren Partikeldurchmesser von 1 µm bis 100 µm und
- 5 - 25 Gew.-% eines Bindemittels
aufweist, wobei die Anteile der Komponenten in Summe maximal 100 Gew.% ergeben.

Unter Elektrodenmaterial wird im Sinne dieser Erfindung ein Stoff oder eine Mischung aus zwei oder mehreren Stoffen verstanden, der/die es erlaubt, durch Oxidations- und/oder Reduktionsreaktionen elektrochemische Energie in einer Batterie zu speichern. Je nach dem, ob die elektrochemische Reaktion, welche, in der (geladenen) Batterie, Energie liefert eine Oxidation oder Reduktion ist, spricht man von negativem oder positivem Elektrodenmaterial oder auch von Anoden- oder Kathodenmaterial.

Es kann vorteilhaft sein, wenn das erfindungsgemäße Elektrodenmaterial von 0 bis 5 Gew.-%, bevorzugt von 0,5 bis 4 Gew.-% an Leitruß enthält. Vorzugsweise enthält das erfindungsgemäße Elektrodenmaterial als Leitruß ein hochreinen synthetischen Russ, bevorzugt weist dieser eine mittlere Teilchengröße von 20 bis 60 nm, besonders bevorzugt von 30 bis 50 nm auf. Vorteilhaft ist ferner, dass der in dem erfindungsgemäßen Elektrodenmaterial enthaltene Leitruß eine BET-Oberfläche von 50 bis 80 m²/g, bevorzugt von 55 bis 70 m²/g aufweist. In einer besonderen Ausführungsform des erfindungsgemäßen Elektrodenmaterials weist dieses als Leitruß einen hochreinen synthetischen Ruß mit einer mittleren Teilchengröße von 35 bis 45 nm und einer BET-Oberfläche von 57 bis 67 m²/g auf.

Ebenso kann es vorteilhaft sein, wenn das erfindungsgemäße Elektrodenmaterial von 5 bis 25 Gew.-%, bevorzugt von 5 bis 10 Gew.-% und besonders bevorzugt 10 Gew.-% an einem Bindemittel aufweist. Unter einem Bindemittel im Sinne dieser Erfindung wird eine chemische Verbindung verstanden, die in der Lage ist die Komponenten Siliziumpartikel, Graphit und gegebenenfalls Leitruß untereinander und mit dem Trägermaterial, das vorzugsweise aus Kupfer, Nickel oder Edelstahl besteht, zu verbinden. Vorzugsweise weist das erfindungsgemäße Elektrodenmaterial polymere Bindemittel, bevorzugt Polyvinylidenfluorid (PVdF), Polytetrafluorethylen oder Polyolefine, besonders bevorzugt jedoch thermoplastische Elastomere, insbesondere Ethylen/Propylen-Dien-Terpolymere, auf. In einer besonderen Ausführungsform des erfindungsgemäßen Elektrodenmaterials weist dieses Gelatine oder modifizierte Zellulose als Bindemittel auf.

Das erfindungsgemäße Elektrodenmaterial weist von 5 bis 80 Gew.-% an Graphit auf, der vorzugsweise einen mittleren Partikeldurchmesser von 1 bis 100 µm, bevorzugt von 2 bis 50 µm aufweist. Der in dem erfindungsgemäßen Elektrodenmaterial enthaltene Graphit weist vorzugsweise einem d₉₀-Wert von 5 bis 10 µm auf Im Sinne dieser Erfindung wird unter einem d₉₀-Wert von 6 µm verstanden, dass 90 % aller Partikel eine Partikelgröße von kleiner oder gleich 6 µm haben. Ferner weist der in dem erfindungsgemäßen Elektrodenmaterial enthaltene Graphit eine BET-Oberfläche vorzugsweise von 5 bis 30 m²/g, bevorzugt von 10 bis 20 m²/g auf.

Das erfindungsgemäße Elektrodenmaterial weist des Weiteren von 5 bis 85 Gew.-% an nanoskaligen Siliziumpartikel auf, die einen mittleren Primärpartikeldurchmesser von 5 bis 200 nm, bevorzugt von 5 bis 100 nm aufweisen. Primärpartikel, die sich zu Agglomeraten oder Aggregaten zusammengelagert haben, weisen vorzugsweise eine Größe von 20 bis 1000 nm auf. Die Partikeldurchmesser werden anhand von Aufnahmen mittels eines Transmissionselektronenmikroskops (TEM) ermittelt.

In einer bevorzugten Ausführungsform weist das erfindungsgemäße Elektrodenmaterial vorzugsweise 8 bis 20 Gew.-%, bevorzugt von 10 bis 15 Gew.-% an Graphit und von 65 bis 86,5 Gew.-%, bevorzugt jedoch von 70 bis 84,5 Gew.-% an nanoskaligen Siliziumpartikeln auf. In einer besonders bevorzugten Ausführungsform des erfindungsgemäßen Elektrodenmaterials für Lithium-Ionen-Batterien weist dieses
- 65 -86,5 Gew.% nanoskalige Siliziumpartikel,
- 0,5 -10 Gew.-% Leitruß,
- 8-20 Gew.-% Graphit mit einem mittleren Partikeldurchmesser von 1 µm bis 100 µm und
- 5 -10 Gew.-% eines Bindemittels
auf Ganz besonders bevorzugt ist die folgende Zusammensetzung des erfindungsgemäßen Elektrodenmaterials
- 80 Gew.% nanoskalige Siliziumpartikel,
- 0,5-10 Gew.-% Leitruß,
- 10 - 15 Gew.-% Graphit mit einem mittleren Partikeldurchmesser von 1 µm bis 100 µm und
- 5 -10 Gew.-% eines Bindemittels.

In einer weiteren Ausführungsform des erfindungsgemäßen Elektrodenmaterials weist dieses von 55 bis 85 Gew.-%, vorzugsweise von 65 bis 80 Gew.-% an Graphit und von 5 bis 40 Gew.-%, vorzugsweise von 10 bis 30 Gew.-% an nanoskaligen Siliziumpartikeln auf. In einer bevorzugten Ausführungsform dieses erfindungsgemäßen Elektrodenmaterials weist es
- 5 - 40 Gew.-% nanoskalige Siliziumpartikel,
- 55 - 85 Gew.-% Graphit mit einem mittleren Partikeldurchmesser von 2 µm bis 50 µm und
- 5 - 10 Gew.-% eines Bindemittels
auf. Besonders bevorzugt ist die folgende Zusammensetzung des erfindungsgemäßen Elektrodenmaterials
- 20 Gew.-% nanoskalige Siliziumpartikel,
- 70 - 75 Gew.-% Graphit mit einem mittleren Partikeldurchmesser von 2 µm bis 50 µm und
- 5-10 Gew.-% eines Bindemittels.

Das erfindungsgemäße Elektrodenmaterial weist als Siliziumpartikel ein nanoskaliges, aggregiertes, kristallines Siliziumpulver mit einer BET-Oberfläche von 5 bis 700 m²/g, bevorzugt von 6 bis 140 m²/g, besonders bevorzugt von 7 bis 50 m²/g und ganz besonders bevorzugt von 10 bis 20 m²/g auf. In einer besonderen Ausführungsform des erfindungsgemäßen Elektrodenmaterials kann es ein nanoskaliges, aggregiertes, kristallines Siliziumpulver mit einer BET-Oberfläche von mindestens 150 m²/g, bevorzugt von 160 bis 600 m²/g, besonders bevorzugt von 160 bis 450 m²/g aufweisen. Die BET-Oberfläche wird gemäß dieser Erfindung nach ISO 9277 (1995), die die DIN 66131 ersetzt, ermittelt.

Unter aggregiert ist im Rahmen dieser Erfindung zu verstehen, dass sphärische oder weitestgehend sphärische Primärpartikel, wie sie zunächst in der Reaktion gebildet werden, im weiteren Reaktionsverlauf zu Aggregaten zusammenwachsen. Der Verwachsungsgrad der Aggregate kann durch die Prozessparameter beeinflusst werden. Diese Aggregate können im weiteren Reaktionsverlauf Agglomerate bilden. Im Gegensatz zu den Aggregaten, die sich in der Regel nicht oder nur teilweise in die Primärpartikel zerlegen lassen, wird im Rahmen dieser Erfindung unter Agglomeraten eine nur lose Zusammenballung von Aggregaten, die leicht in die Aggregate zerfallen können, verstanden.

Unter kristallin ist zu verstehen, dass wenigstens 90 % des frisch hergestellten Siliziumpulvers kristallin ist. Unter frisch hergestelltem Pulver wird im Sinne dieser Erfindung das Pulver verstanden, das soeben den Herstellungsprozess durchlaufen hat und noch keine Alterungserscheinungen, wie beispielsweise durch Oxidation an der Oberfläche, aufweist. Ein solcher Anteil an Kristallinität kann z.B. durch Röntgendiffraktometrie mittels eines Vergleich der Intensitäten der [111]-, [220]- und [311]-Signale des eingesetzten Siliziumpulvers mit einem Siliziumpulver bekannter Kristallinität und Kristallitgröße ermittelt werden. Bevorzugt wird ein Siliziumpulver mit wenigstens 95 %, besonders bevorzugt ein solches mit wenigstens 98 % kristallinem Anteil eingesetzt. Zur Ermittlung dieser Kristallisationsgrade eignet sich beispielsweise die Auswertung von Aufnahmen eines Transmissionselektronenmikroskops (TEM) und Auszählung der Primärpartikel, welche Gitternetzlinien als Merkmal des kristallinen Zustandes aufweisen.

Weiterhin kann das erfindungsgemäße Elektrodenmaterial Siliziumpartikel aufweisen, die dotiert sind. Bevorzugt können als Dotierkomponenten die Elemente Phosphor, Arsen, Antimon, Bor, Aluminium, Gallium und/oder Indium vorhanden sein. Unter Dotierkomponente im Sinne der Erfindung ist das in den Siliziumpartikeln vorliegende Element zu verstehen. Der Anteil dieser Dotierkomponenten kann in den Siliziumpartikeln bis zu 1 Gew.-% betragen. In der Regel enthalten die Siliziumpartikel die Dotierkomponente im ppm oder ppb-Bereich. Bevorzugt ist ein Bereich von 10¹³ bis 10¹⁵ Atome Dotierkomponente/cm³.

Ebenfalls ist es möglich, dass die Siliziumpartikeln in dem erfindungsgemäßen Elektrodenmaterial Lithium als Dotierkomponente aufweisen. Der Anteil des Lithiums in den Siliziumpartikeln kann bis zu 53 Gew.-% betragen. Besonders bevorzugt können in den Siliziumpartikeln bis zu 20 bis 40 Gew.-% Lithium enthalten sein.

Die Dotierkomponente kann dabei homogen in den Siliziumpartikeln verteilt sein, oder in der Schale oder im Kern der Primärpartikel angereichert oder interkaliert sein. Bevorzugt können die Dotierkomponenten auf Gitterplätzen des Siliziums eingebaut sein. Dies ist im wesentlichen von der Art des Dotierstoffes und der Reaktionsführung bei der Herstellung der Siliziumpartikel abhängig.

Das erfindungsgemäße Elektrodenmaterial kann Siliziumpartikel aufweisen, die, solange sie frisch hergestellt sind, weiterhin eine Wasserstoffbeladung von bis zu 98 mol-% bezogen auf das Silizium an der Partikeloberfläche aufweisen, wobei ein Bereich von 30 bis 95 mol-% besonders bevorzugt ist. Geeignet zur Bestimmung der Wasserstoffbeladung sind NMRspektroskopische Methoden, wie beispielsweise ¹H-MAS-NMR-Spektroskopie, Headspace-Gaschromatographie nach einer hydrolytischen Wasserstoffabspaltung oder einer Effusionsspektrometrie nach einer thermischen Wasserstoffabspaltung. Für eine qualitative Bestimmung der Wasserstoffbeladung kann auch die IR-Spektroskopie herangezogen werden.

Die Herstellung der in dem erfindungsgemäßen Elektrodenmaterial enthaltenen Siliziumpartikel erfolgt vorzugsweise mittels eines Verfahrens, das dadurch gekennzeichnet ist, dass
- wenigstens ein dampf- oder gasförmiges Silan, und gegebenenfalls wenigstens ein dampf oder gasförmigen Dotierstoff, ein Inertgas und Wasserstoff in einem Heißwandreaktor thermisch behandelt wird,
- das Reaktionsgemisch abgekühlt oder abkühlen gelassen wird und
- das Reaktionsprodukt in Form eines Pulvers von gasförmigen Stoffen abgetrennt wird,
wobei der Anteil des Silans von 0,1 bis 90 Gew.-%, bezogen auf die Summe aus Silan, Dotierstoff, Wasserstoff und Inertgasen, beträgt und der Anteil des Wasserstoffes, bezogen auf die Summe von Wasserstoff, Silan, Inertgas und gegebenenfalls Dotierstoff, in einem Bereich von 1 mol-% bis 96 mol-% liegt. Besonders vorteilhaft kann ein wandbeheizter Heißwandreaktor eingesetzt werden, wobei der Heißwandreaktor so zu dimensionieren ist, dass ein möglichst vollständiger Umsatz des Einsatzstoffes und gegebenenfalls des Dotierstoffes erreicht wird. In der Regel wird die Verweilzeit im Heißwandreaktor zwischen 0,1 s und 2 s betragen. Die Maximaltemperatur im Heißwandreaktor wird vorzugsweise so gewählt, dass sie 1000°C nicht übersteigt. Die Abkühlung des Reaktionsgemisches kann beispielsweise durch eine externe Wandkühlung des Reaktors oder durch Einbringen von Inertgas in einem Quench erfolgen. Bevorzugt können wasserstoffenthaltende Verbindungen von Phosphor, Arsen, Antimon, Bor, Aluminium, Gallium, Indium und/oder Lithium als Dotierstoff eingesetzt werden. Besonders bevorzugt sind Diboran und Phosphan oder substituierte Phosphane, wie tBuPH₂, tBu₃P, tBuPh₂P und Trismethylaminophosphan ((CH₃)₂N)₃P. Im Falle von Lithium als Dotierkomponente, hat es sich am günstigsten erwiesen, als Dotierstoff das Metall Lithium oder Lithiumamid LiNH₂ einzusetzen. Mittels diesem Herstellungsverfahren kann aggregiertes, kristallines Siliziumpulver mit einer BET-Oberfläche von 5 bis 150 m²/g hergestellt werden.

Unter Dotierstoff ist die Verbindung zu verstehen, die im Verfahren eingesetzt wird, um die Dotierkomponente zu erhalten.

Als Siliziumpartikel kann das erfindungsgemäße Elektrodenmaterial auch ein nanoskaliges, aggregiertes, kristallines Siliziumpulver aufweisen, das durch ein Verfahren hergestellt wurde, das dadurch gekennzeichnet ist, dass man kontinuierlich
- wenigstens ein dampf- oder gasförmiges Silan und gegebenenfalls wenigstens einen dampf- oder gasförmigen Dotierstoff, zusammen mit einem Inertgas
- in einen Reaktor überführt und dort mischt,
wobei der Anteil des Silans zwischen 0,1 und 90 Gew.%, bezogen auf die Summe aus Silan, Dotierstoff und Inertgasen, beträgt, durch Energieeintrag mittels elektromagnetischer Strahlung im Mikrowellenbereich bei einem Druck von 10 bis 1100 mbar ein Plasma erzeugt wird und das Reaktionsgemisch abkühlen gelassen wird oder abkühlt und das Reaktionsprodukt in Form eines Pulvers von gasförmigen Stoffen abtrennt wird. Bei diesem Herstellungsverfahren wird ein stabiles Plasma erzeugt, welches zu einem sehr einheitlichen Produkt führt und im Gegensatz zu Verfahren, welche im hohen Vakuum arbeiten, hohe Umsätze erlaubt. In der Regel liegt der Umsatz an Silan bei wenigstens 98 %. Das Verfahren wird so ausgeführt, dass der Anteil an Silan, gegebenenfalls unter Einschluss der Dotierkomponente, im Gasstrom von 0,1 bis 90 Gew.-% liegt. Bevorzugt ist ein Silan-Anteil von 1 bis 10 Gew.-%. Bei diesem Anteil werden in der Regel Aggregate mit einem Durchmesser von weniger als 1 µm erzielt. Der Leistungseintrag ist nicht limitiert. Bevorzugterweise ist er so zu wählen, dass die rückgestrahlte, nicht absorbierte Mikrowellenleistung minimal ist und ein stabiles Plasma entsteht. In der Regel wird in diesem Herstellungsverfahren der Energieeintrag von 100 W bis 100 kW, und besonders bevorzugt von 500 W bis 6 kW, liegen. Dabei kann durch die eingestrahlte Mikrowellenleistung die Partikelgrößenverteilung variiert werden. So können, bei gleichen Gaszusammensetzungen und Volumenströmen, höhere Mikrowellenleistungen zu einer kleineren Partikelgröße und zu einer engeren Partikelgrößenverteilung führen. Mittels diesem Herstellungsverfahren können aggregiertes, kristallines Siliziumpulver mit einer BET-Oberfläche größer 50 m²/g hergestellt werden.

In beiden Herstellungsverfahren der Siliziumpartikel ist das Silan vorzugsweise eine siliziumhaltige Verbindung, welches unter den Reaktionsbedingungen Silizium, Wasserstoff, Stickstoff und/oder Halogene liefert. Bevorzugt sind dies SiH₄, Si₂H₆, ClSiH₃, Cl₂SiH₂, Cl₃SiH und/oder SiCl₄, wobei SiH₄ besonders bevorzugt ist. Daneben ist es auch möglich N(SiH₃)₃, HN(SiH₃)₂, H₂N(SiH₃), (H₃Si)₂NN(SiH₃)₂, (H₃Si)NHNH(SiH₃), H₂NN(SiH₃)₂ einzusetzen.

Ein Dotierstoff ist in diesen beiden Herstellungsverfahren eine Verbindung, die die Dotierkomponente kovalent oder ionisch gebunden enthält und die unter den Reaktionsbedingungen die Dotierkomponente, Wasserstoff, Stickstoff, Kohlenmonoxid, Kohlendioxid und/oder Halogene liefert. Bevorzugt können wasserstoffenthaltende Verbindungen von Phosphor, Arsen, Antimon, Bor, Aluminium, Gallium, Indium und/oder Lithium eingesetzt werden. Besonders bevorzugt sind Diboran und Phosphan oder substituierte Phosphane, wie tBuPH₂, tBu₃P, tBuPh₂P oder tBuPh₂P und Trismethylaminophosphan ((CH₃)₂N)₃P. Im Falle von Lithium als Dotierkomponente, hat es sich am günstigsten erwiesen, als Dotierstoff das Metall Lithium oder Lithiumamid LiNH₂ einzusetzen.

Als Inertgas können in beiden Herstellungsverfahren der Siliziumpartikel hauptsächlich Stickstoff, Helium, Neon, Argon eingesetzt werden, wobei Argon besonders bevorzugt ist

Weiterer Gegenstand der Erfindung ist die Verwendung des erfindungsgemäßen Elektrodenmaterials zur Herstellung von Lithium-Ionen-Batterien. Das erfindungsgemäße Elektrodenmaterial wird vorzugsweise zur Herstellung der negativen Elektrode einer Lithium-Ionen-Batterie verwendet Hierbei kann das erfindungsgemäße Elektrodenmaterial in einer Schichtdicke von 2 µm bis 500 µm, bevorzugt von 10 µm bis 300 µm auf eine Kupferfolie oder einen anderen Stromsammler aufgerakelt werden. Andere Beschichtungsverfahren können ebenso verwendet werden. Vor dem Beschichten der Kupferfolie mit dem erfindungsgemäßen Elektrodenmaterial erfolgt vorzugsweise eine Behandlung der Kupferfolie mit einem handelsüblichen Primer, auf der Basis von Polymerharzen. Er erhöht die Haftung auf dem Kupfer, besitzt aber selbst praktisch keine elektrochemische Aktivität. Der Primer ist vorzugsweise ein schwermetallfreier Polymerkleber auf Polychloropren-Basis. Er wird vorzugsweise in einer Schichtdicke von 1 bis 100 µm, bevorzugt von 5 bis 30 µm, aufgetragen. Es können jedoch auch andere Haftvermittler verwendet werden oder man kann auf die Verwendung des Haftvermittlers gänzlich verzichten.

Vorzugsweise wird das erfindungsgemäße Elektrodenmaterial zur Herstellung von Lithium-Ionen-Batterien eingesetzt, die als Elektrolyte eine Elektrolytzusammensetzung aus mindestens einem organischen Lösungsmittel, ausgewählt aus Ethylencarbonat, Dimethylcarbonat, Ethylmethylcarbonat, Diethylcarbonat, Propylencarbonat, Butylencarbonat, Methylpropylcarbonat, Butylmethylcarbonat und seine Isomere, 1,2-Dimethoxyethan, Tetrahydrofuran, 2-Methyltetrahydrofuran, Diethylenglycoldialkylester, Dioxolan, Propylenoxid, Dimethylsulfoxid, Dimethylformamid, Formamid, Nitromethan, gamma-Butyrolacton, Carbonsäurealkylester und/oder Methyllactat, und mindestens einem Alkali- oder Erdalkalimetallsalz als Leitsalz, ausgewählt aus LiPF₆, LiC10₄, LiAsF₆, LiBF₄, LiCF₃SO₃, LiN(CF₃SO₂)₂, LiN(SO₂CF₂CF₃)₂, LiSbF₆, LiAlCl₄, LiGaCl₄, LiCI, LiNO₃, LiSCN, LiO₃SCF₂CF₃, LiC₆F₅SO₃, LiO₂CCF₃, LiFSO₃, LiB(C₆H₅)₄, LiB(C₂O₄)₂, Lithiumfluoroalkylphosphate, aufweisen. Die Konzentration des Leitsalzes beträgt vorzugsweise von 0,5 mol/l bis zur Löslichkeitsgrenze des entsprechenden Salzes, bevorzugt jedoch 2 mol/l.

Die Lithium-Ionen-Batterien können allerdings auch einen Elektrolyten aufweisen, der von 0,5 bis 10 Gew.-%, bevorzugt von 2 bis 5 Gew.-% Vinylencarbonat aufweist.

Bevorzugt wird bei der erfindungsgemäßen Verwendung des erfindungsgemäßen Elektrodenmaterials zur Herstellung von Lithium-Ionen-Batterien ein Elektrolyt eingesetzt, der von 20 bis 70 Vol.-% an Ethylencarbonat und/oder 20 bis 70 Vo1.-% Dimethylcarbonat, 0,5 bis 2 mol/l LiPF₆ und einen Zusatz von 0,5 bis 5 Gew.-% Vinylencarbonat aufweist. Besonders bevorzugt wird ein Elektrolyt eingesetzt, der Propylencarbonat mit von 0,5 bis 2 mol/l LiPF₆ und einen Zusatz von 0,5 bis 5 Gew.-% Vinylencarbonat aufweist.

Ferner ist Gegenstand der Erfindung eine Lithium-Ionen-Batterie mit einer negativen Elektrode, die das erfindungsgemäße Elektrodenmaterial aufweist.

Die nachfolgenden Beispiele sollen das erfindungsgemäße Elektrodenmaterial näher erläutern, ohne dass die Erfindung auf diese Ausführungsform beschränkt sein soll.

### 1. Herstellung der nanoskaligen Siliziumpartikel

### 1.1. Herstellung der nanoskaligen Siliziumpartikel in einem Heißwandreaktor

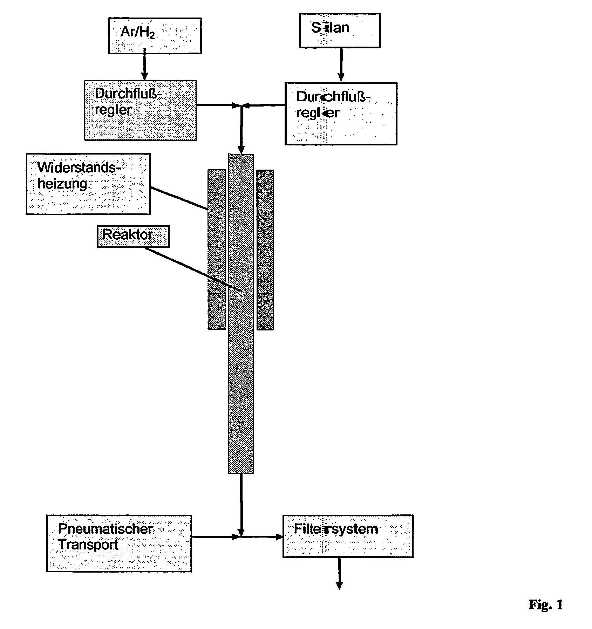

Die nanoskaligen Siliziumpartikel Si1, Si2 und Si3 wurden in einem vertikal angeordneten Heißwandreaktor mit einem Rohr, das eine Länge von 200 cm und einem Durchmesser d aufweist, hergestellt. Das Rohr besteht aus Quarzglas oder Si/SiC mit einem Quarzglas-Inliner und wird extern mittels einer Widerstandsheizung über eine Zone von 100 cm auf 1000°C beheizt. Über eine Zweistoffdüse wird von oben diesem Heißwandreaktor ein Eduktgemisch aus Silan (SiH₄), Argon und Wasserstoff zugeführt. Einen schematischen Aufbau der Versuchsanordnung zeigt Fig. 1. In einer nachgeschalteten Filtereinheit wird das pulverförmige Produkt von den gasförmigen Stoffen abgetrennt Die Tabelle 1 enthält die jeweiligen Verfahrensparameter für die Herstellung der nanoskaligen Siliziumpartikel Si1, Si2 und Si3.

| | **Durchmesser *d* des Rohres (in cm)** | **Volumenstrom (in sccm¹)** | | |
|---|---|---|---|---|
| | | **Silan (SiH₄)** | **Argon** | **Wasserstoff** |
| **Si1** | 6 | 2300 | 8700 | 0 |
| **Si2** | 6 | 3500 | 0 | 10500 |
| **Si3** | 10 | 7000 | 0 | 21000 |

| | | | | |
|---|---|---|---|---|
| ¹ sccm steht für standard centimeter cube per minute, 1 sccm entspricht 1 cm³ Gas pro Minute bezogen auf 0°C und Atmosphärendruck. | | | | |

### 1.2 Herstellung von nanoskaligen Siliziumpartikeln, das mit Bor dotiert ist in einem Mikrowellenreaktor.

Zur Erzeugung des Plasmas wird ein Mikrowellengenerator der Fa. Muegge eingesetzt. Die Mikrowellenstrahlung wird mittels eines Tuners (3-Stab Tuner) im Reaktionsraum fokussiert. Durch die Auslegung des Hohlwellenleiters, die Feinabstimmung mittels des Tuners und die genaue Positionierung der Düse, die als Elektrode fungiert, wird im Druckbereich von 10 mbar bis 1100 mbar und einer Mikrowellenleistung von 100 bis 6000 W ein stabiles Plasma erzeugt. Der Mikrowellenreaktor besteht aus einem Quarzglasrohr mit einem Außendurchmesser von 30 mm und einer Länge von 120 mm, das in den Plasmaapplikator eingesetzt ist. Die nanoskaligen Siliziumpartikel vom Typ SiB4 wurden mittels solch eines Mikrowellenreaktors hergestellt. Hierfür wurde über eine Zweistoffdüse dem Mikrowellenreaktor ein SiH₄/Argon-Gemisch - bestehend aus 200 sccm Silan und 1800 sccm Argon - sowie über die zweite Düse ein weiteres Gemisch bestehend aus 10000 sccm Wasserstoff und 20 sccm B₂H₆ zugeführt. Mittels einer Mikrowelle wird eine Leistung von 1000 W in das Gasgemisch eingebracht und dadurch ein Plasma erzeugt. Die aus dem Reaktor über eine Düse austretende Plasmafackel expandiert in einen Raum, dessen Volumen mit ca. 20 1 im Vergleich zum Reaktor verhältnismäßig groß ist Der Druck in diesem Raum und im Reaktor ist auf 80 mbar geregelt. In einer nachgeschalteten Filtereinheit wird das pulverförmige Produkt von gasförmigen Stoffen abgetrennt.

### 2. Charakterisierung der nanoskaligen Siliziumpartikel

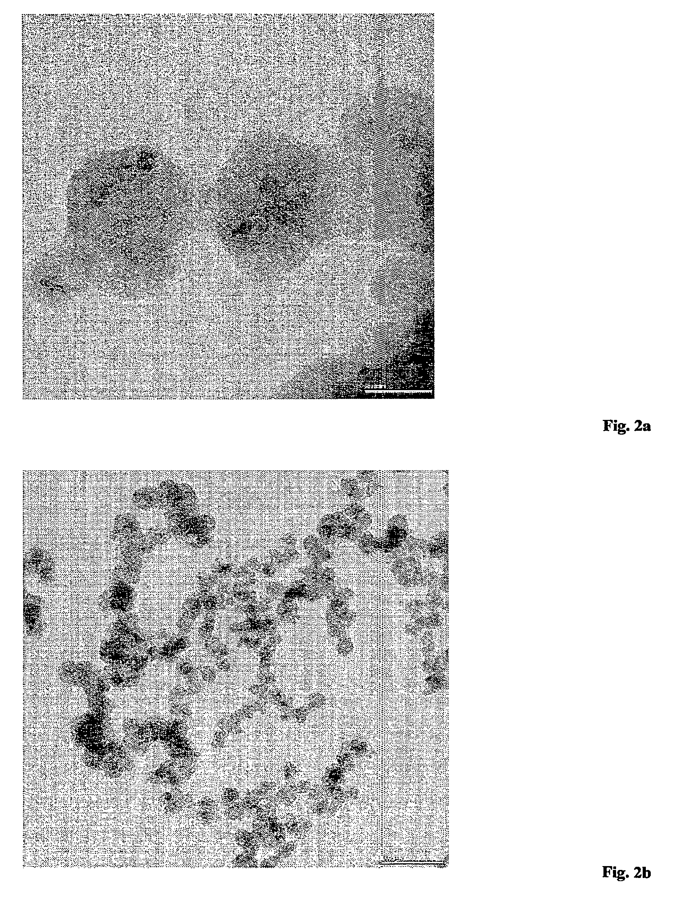

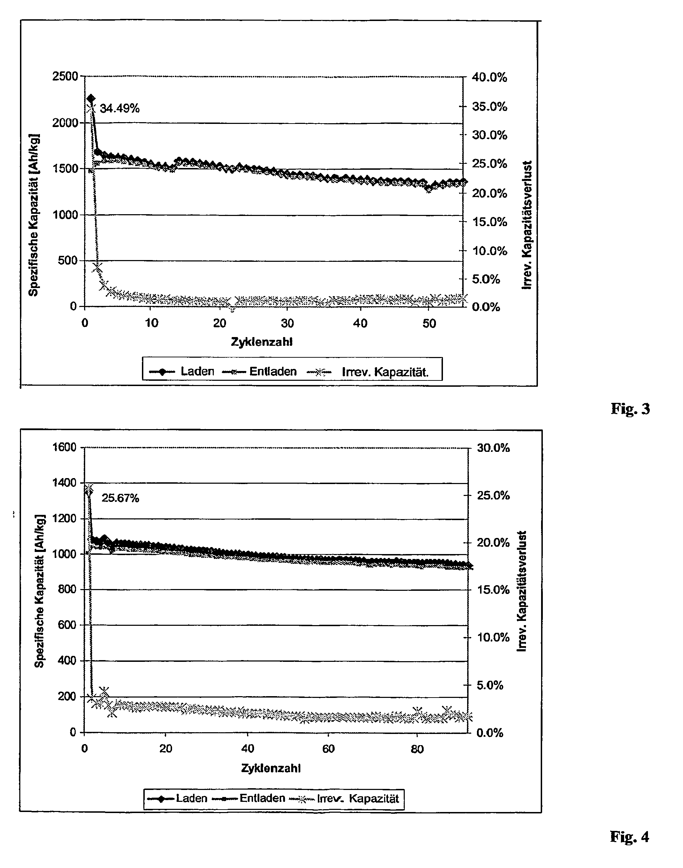

Die BET-Oberflächen der nanoskaligen Siliziumpartikeln wurden gemäß ISO 9277 (1995) bestimmt. Die Partikelgrößen wurden anhand von TEM-Aufnahmen ermittelt. Fig. 2a und 2b zeigen TEM-Aufnahmen mit verschiedenen Auflösungen (Balken entspricht in Fig. 2a 50 nm und in Fig. 2b 0,5 µm) der nanoskaligen Siliziumpartikel Si3. Die Tabelle 1 zeigt eine Zusammenstellung der in den Beispielen eingesetzten nanoskaligen Siliziumpartikel.

**Tabelle 1:**

| | **Si1** | **Si2** | **Si3** | **SiB4** |
|---|---|---|---|---|
| **Primärpartikelgröße (nm)** | 20-200 | 20 - 200 | 20-200 | 5 - 50 |
| **Form der Partikel** | Fadenförmig | Fadenförmig | Fadenförmig | Sphärisch |
| **Spezifische Oberfläche (m²/g)** | 11 | 12 | 11 | 170 |

### 3. Herstellung des Elektrodenmaterials

Die Materialien werden zunächst mechanisch gemischt, anschließend in einer N-Methylpyrrolidon-Suspension mittels eines Hochgeschwindigkeitsrührers ein weiteres Mal gemischt und anschließend auf eine mit einem Primer vorbehandelte 20 µm dicke handelsübliche Kupferfolie aufgerakelt, in einer Dicke von vorzugsweise 250 µm. Die auf diese Weise beschichtete Kupferfolie wird anschließend bei 80°C unter Vakuum getrocknet. In manchen Fällen wurde das Material anschließend bei ca. 80°C gewalzt. Die Elektroden wurden anschließend kreisförmig aus dieser beschichteten Kupferfolie ausgestanzt.

Die Behandlung der Kupferfolie vor dem Beschichten mit dem erfindungsgemäßen Elektrodenmaterial erfolgte mit einem handelsüblichen Primer, auf der Basis von Polymerharzen. Er erhöht die Haftung auf dem Kupfer, besitzt aber selbst praktisch keine elektrochemische Aktivität. Als Primer wurde in unserem Fall der "Haftvermittler Conti Plus" von der Firma ContiTech benutzt. Er ist ein schwermetallfreier Polymerkleber auf Polychloropren-Basis. Er wird in einer Schichtdicke von 5 bis 30 µm aufgetragen.

Die Tabelle 2 zeigt eine Zusammenstellung der in den Beispielen verwendeten erfindungsgemäßen Elektrodenmaterialien und deren Zusammensetzung.

**Tabelle 2:**

| **Beispiel** | **Nanoskalige Silizumpatikel (Gew.-%)** | **Leitruß (Gew.-%)** | **Feinteiliger Graphit (Gew.-%)** | **Bindemittel (Gew.-%)** |
|---|---|---|---|---|
| EM_Si1_80 | 80 Si1 | <2 | 10 | 8 PVdF |
| EM_Si2_80 | 80 Si2 | <2 | 10 | 8 PVdF |
| EM_Si3_80 | 80 Si3 | <2 | 10 | 8 PVdF |
| BM_SiB4_80 | 80 SiB4 | <2 | 10 | 8 PVdF |
| EM_Si1_20 | 20 Si1 | 0 | 70 | 10 PVdF |
| EM_Si2_20 | 20 Si2 | 0 | 70 | 10 PVdF |
| EM_SiB4_60 | 60 SiB4 | 0 | 15 | 25 Polyolefin (Oppanol B 200 der Fa. BASF) |

Als Leitruß wurde ein Leitruß mit einer Produktbezeichnung *Super P* verwendet (Hersteller TIMCAL SA, Schweiz), hierbei handelt es sich um einen hochreinen synthetischen Russ mit einer mittleren Teilchengröße von ca. 40 nm und einer BET-Oberfläche von 62 m²/g (± 5 m²/g)_{.}

Als Graphit wurde ein Graphit mit einer Produktbezeichnung KS6 (Hersteller TIMCAL SA, Schweiz) eingesetzt, hierbei handelt es sich um einen synthetischen Graphit mit einem d₉₀-Wert von ca. 6 µm und einer BET-Oberfläche von ca. 13,8 m²/g. Die Partikelform dieses Graphits ist eher rund. In dem Beispiel B9 (in Tabelle 5) wurde jedoch ein Graphit mit der Produktbezeichnung SFG6 (Hersteller TIMCAL SA, Schweiz) eingesetzt. Hierbei handelt es sich um einen synthetischen Graphit mit einem d₉₀-Wert von ca. 6 µm und einer BET-Oberfläche von ca. 17,1 m²/g. Die Partikelform dieses Graphits ist eher flach. Er zeichnet sich gegenüber KS6 durch eine höhere Stabilität gegenüber dem in Beispiel B9 verwendeten propylencarbonatbasierten Elektrolyten aus.

### 4. Durchführung der elektrochemischen Untersuchungen

Das elektrochemische Zyklen fand in sogenannten Halb- und Vollzellenanordnungen statt. Bei der Halbzellenanordnung wird das erfindungsgemäße Elektrodenmaterial als Arbeitselektrode in einer Sandwich-Anordnung Arbeitselektrode - Separator/Elektrolyt - Gegen-/Referenzelektrode gegen eine Lithiumscheibe als Gegen- und -Referenzelektrode gemessen. Als Potentialgrenzen werden 100 mV und 1,0 V vs. Li/Li⁺ verwendet. In den Fällen der Komplettbatterien wird das Material in der Vollzellenanordnung Arbeitselektrode (Graphit) - Separator/Elektrolyt - Gegenelektrode (LiCoO₂) gegen das Standard-Kathodenmaterial LiCoO₂ gemessen. Als Potentialgrenzen werden hier von 2,5 bis 3 V und von 4 bis 4,2 V verwendet. Die Zyklengeschwindigkeit wird mit der Stromdichte pro aktive Masse - dies entspricht der Gesamtrnasse von Siliziumpartikeln und Graphit - des Elektrodenmaterials angegeben. Die verwendeten Werte hierfür betragen von 74 bis 372 mA/g.

Das Laden erfolgt mit einer Stromabsenkung beim Erreichen der Spannungsgrenze bis unter einen Wert, der 10 mA/g entspricht. Die Verwendung dieser Stromabsenkung ermöglicht, die Leistungsfähigkeit einer Elektrode (Anteil des Stroms, der im Konstantstrommodus, oder galvanostatischen Anteil, fließt) von eventuellen irreversiblen Schäden (die sich in einer Verringerung der gesamten, also einschließlich der im potentiostatischen Schritt fließenden, Kapazität) zu trennen (siehe hierzu H. Buqa et al. in ITE Battery Letters, 4 (2003), 38).

Es wurden zwei verschiedene Arten der Versuchsführung durchgeführt:
1. die klassische, mit einem ausschließlich auf die oberen und unteren Potentialgrenzen basierten Abschaltmodus für die einzelnen Halbzyklen. Dies ist der bei allen gängigen Batterien verwendete Modus.
2. einem sogenannten kapazitätslimitierten Modus, bei dem zusätzlich zu der Potentialuntergrenze im Ladeschritt eine maximale Kapazität vorgegeben wird. Damit wird einer zu starken Ladung vorgebeugt und der mechanische Stress auf das Silizium wird dadurch vermindert, was die Haltbarkeit der Elektrode verlängern sollte.

### 5. Zusammensetzung des Elektrolyts

Die Zusammensetzung der verwendeten Elektrolyten zeigt die Tabelle 3.

**Tabelle 3:**

| | | | |
|---|---|---|---|
| EL1 | Ethylencarbonat : Dimethylcarbonat (im Verhältnis 1: 1) | 1 mol/l LiPF₆ | 2 Gew.-% Vinylencarbonat |
| EL2 | Ethylencarbonat : Dimethylcarbonat (im Verhältnis 1:1) | 1 mol/l LiPF₆ | |
| EL3 | Propylencarbonat | 1 mol/l LiPF₆ | 2 Gew.-% Vinylencarbonat |

### 6. Ergebnisse der elektrochemischen Untersuchungen mittels einer Halbzellenanordnung

Die Tabelle 4 zeigt die Versuchsparameter mit einer Versuchsführung nach dem klassischen Modus und die Tabelle 5 zeigt die Versuchsparameter mit einer Versuchsführung nach dem kapazitätslimitierten Modus.

**Tabelle 4:**

| **Beispiel** | **Elektrodenmaterial** | **Elektrolyt** | **Klassisches Zyklen mit z mA/g** | **Siehe auch** |
|---|---|---|---|---|
| | | | **z** | |
| B1 | EM_Sil_80 | EL1 | 74 | Fig.3 |
| B2 | EM_Sil_20 | EL1 | 50 | Fig.4 |

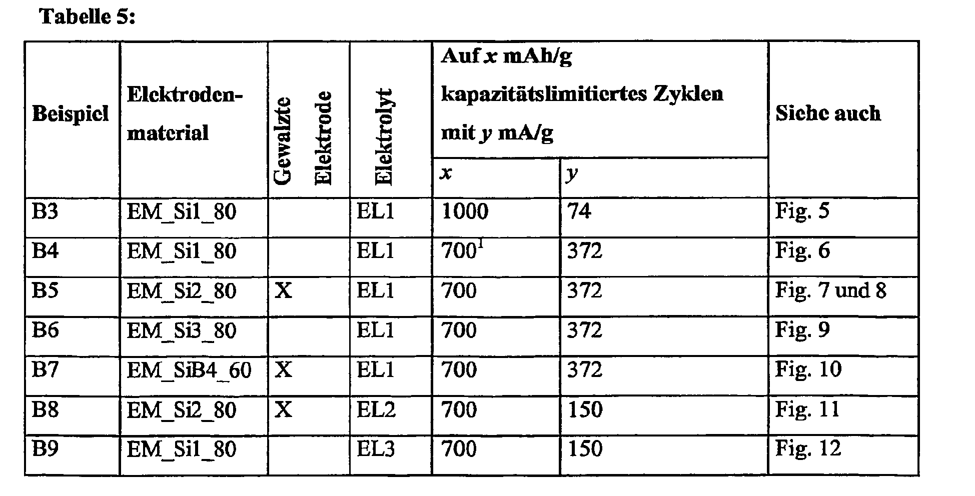

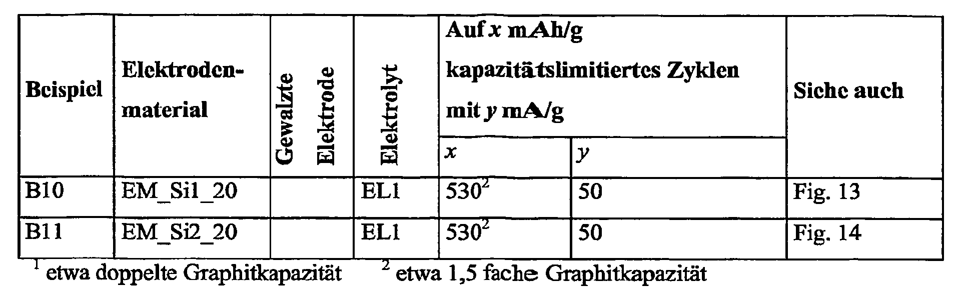

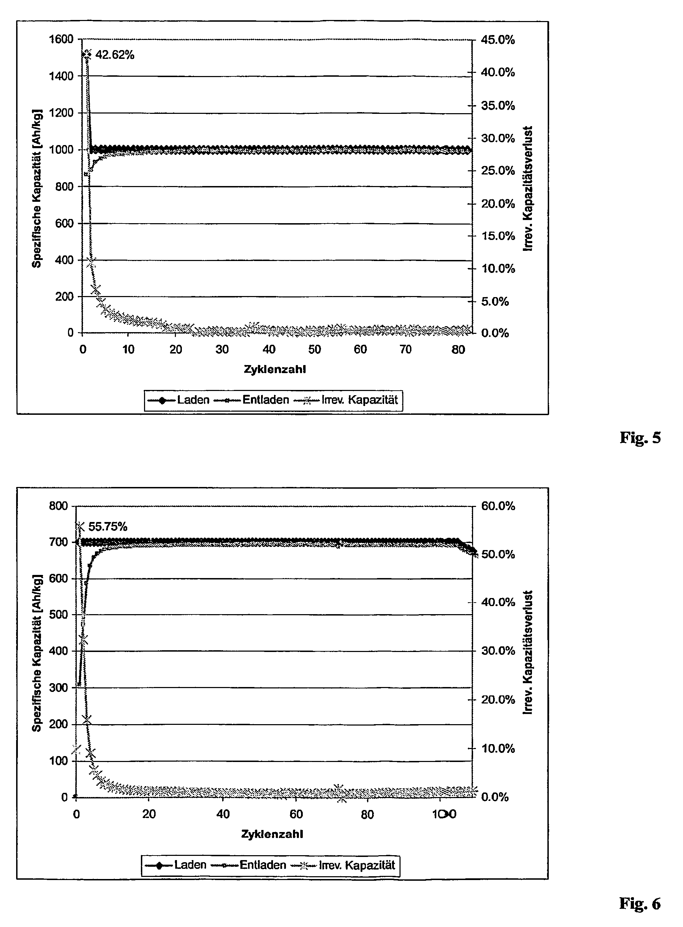

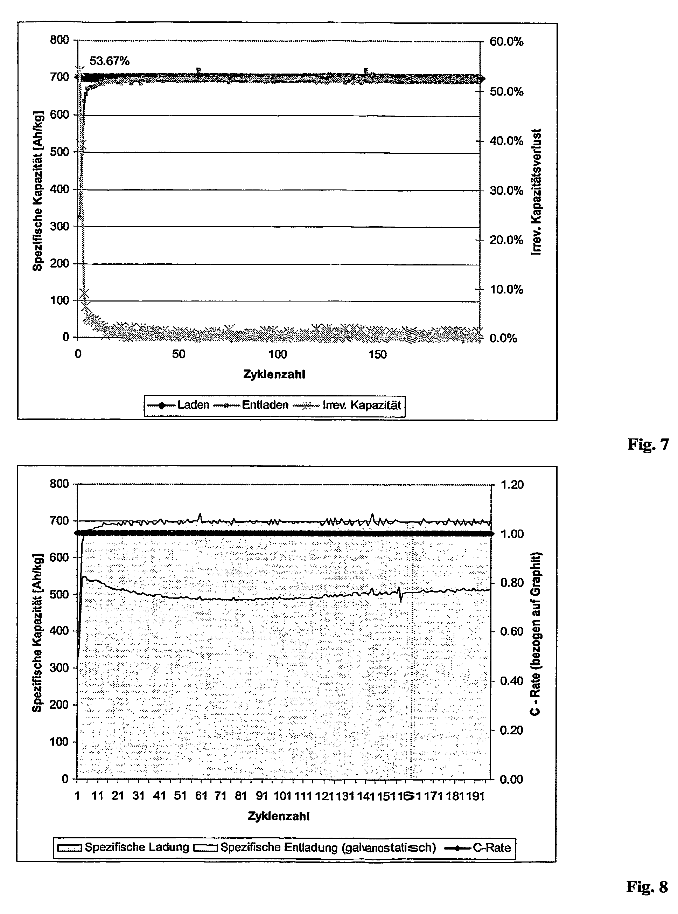

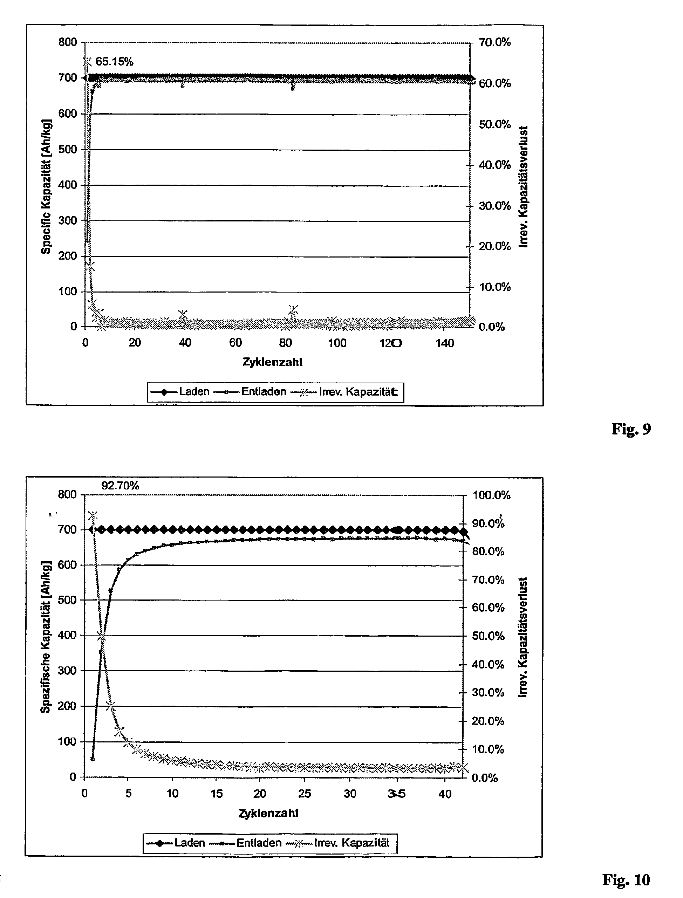

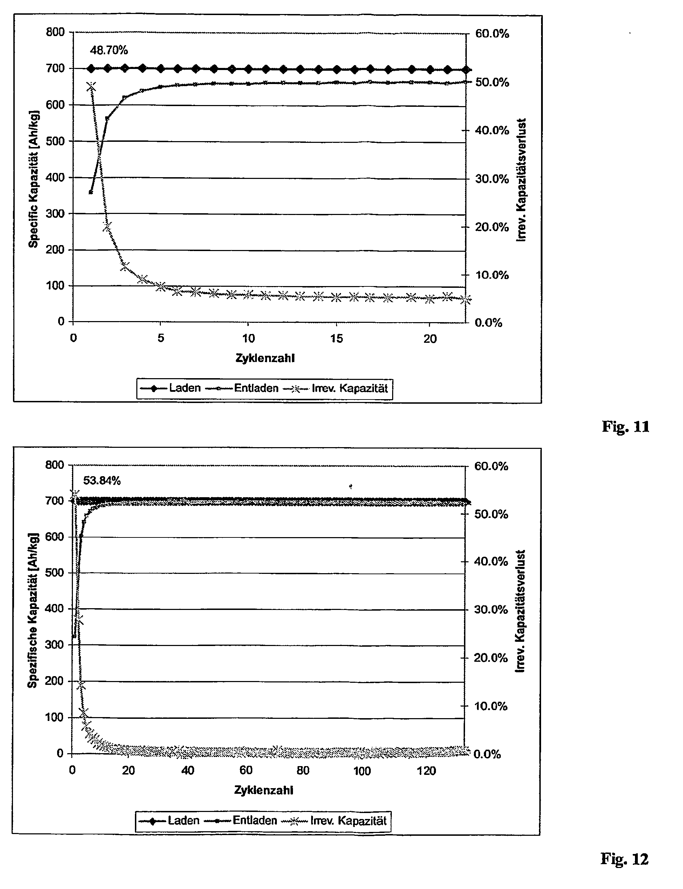

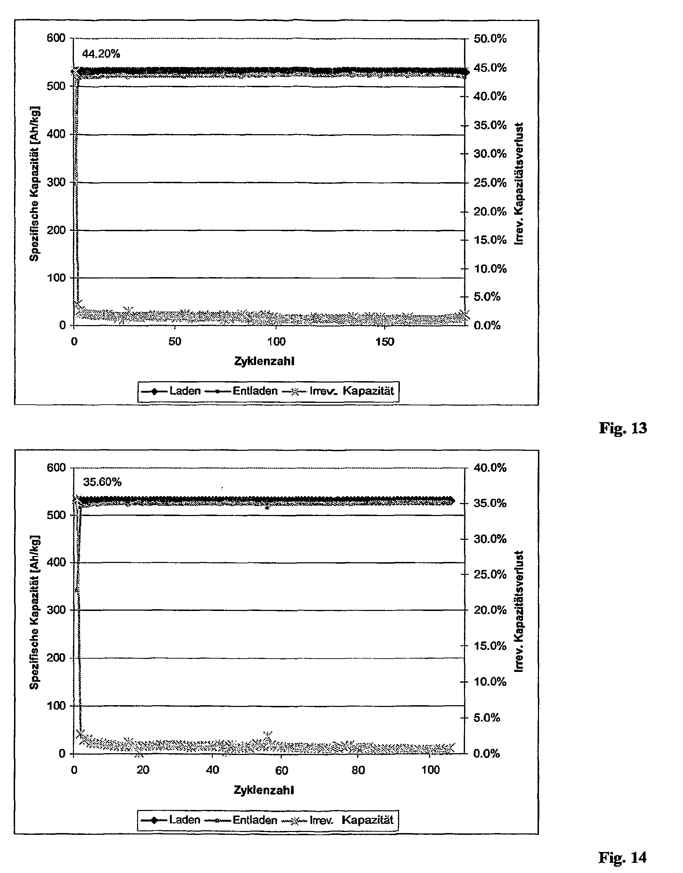

Das in den Beispielen B1 verwendete erfindungsgemäße Elektrodenmaterial zeigt eine hohe reversible Kapazität bis über 1000 mAh/g und eine Stabilität, die bis über 50 Zyklen lang anhält Allerdings kann im ersten Zyklus eine relativ hohe irreversible Kapazität beobachtet werden. Das Beispiel B2 zeigt ein sehr stabiles Verhalten, eine sehr hohe Kapazität, ein schwaches Fading und relativ niedrige irreversible Kapazität vor allem im ersten Zyklus, in dem sie nur 26 % beträgt. Die Beispiele B3 und B4 zeigen, dass das erfindungsgemäße Elektrodenmaterial bei Kapazitätsbegrenzung ein stabiles Zyklen mit mehr als 80 bzw. mehr als 100 Zyklen ermöglicht. Diese Beispiele zeigen, dass die Zyklenstabilität des erfindungsgemäßen Elektrodenmaterials höher ist, als für die in der Literatur beschriebenen siliziumbasierten Elektrodenmaterialien, dies gilt auch für die erreichte reversible Kapazität Daneben ist auch der irreversible Kapazitätsverlust mit etwa 1,5 % pro Zyklus gering. Das Beispiel B5 zeigt ein stabiles Zyklen sogar über 200 Zyklen hin. Weiterhin zeigt die Fig. 6, dass hierbei eine gute Strombelastbarkeit unter Verwendung des erfindungsgemäßen Elektrodenmaterials, die in etwa im Bereich klassischer Elektrodenmaterialien liegt, erreicht wird. Ein stabiles Zyklen während über 150 Zyklen zeigt auch das Beispiel B6, hierbei sind im Vergleich zu den anderen erfindungsgemäßen Elektrodenmaterialien bei höheren Zyklenzahlen etwas niedrigere irreversible Verluste, die jedoch bei den ersten Zyklen höher sind, zu beobachten. Das Beispiel B7 zeigt ebenfalls ein stabiles Zyklen, hierbei liegen die irreversible Verluste bei höheren Zyklenzahlen etwas höher als bei den anderen in den Beispielen verwendeten erfindungsgemäßen Elektrodenmaterialien. Ein stabiles Zyklen über 20 Zyklen zeigt das Beispiel B8, jedoch treten hier höhere irreversible Verluste auf, die auf die Verwendung eines Elektrolyten ohne den filmbildenden Zusatz Vinylencarbonat zurückzuführen sind. Das Beispiel B9 zeigt ein stabiles Zyklen über mehr als 130 Zyklen. Es treten leicht erhöhte irreversible Verluste in den ersten Zyklen auf, allerdings nur sehr geringe irreversible Verluste bei höheren Zyklenzahlen. Ein sehr stabiles Zyklen über mehr als 180 Zyklen mit einer niedrigeren irreversibler Kapazität ab dem zweiten Zyklus zeigt das Beispiel B10 Auch in Beispiel 11 ist ein sehr stabiles Zyklen mit einer niedrigen irreversiblen Kapazität ab dem zweiten Zyklus zu beobachten.

### 7. Test einer Vollzelle

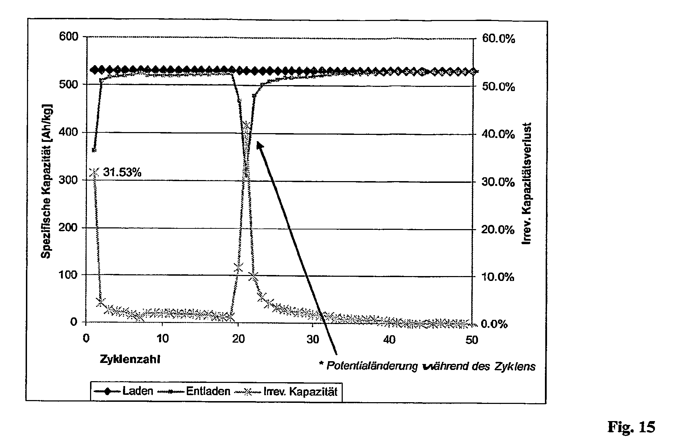

Das Zyklen erfolgt in einer Vollzelle gegen eine LiCoO₂-Elektrode. In diesem Beispiel (gezeigt in Fig. 15) wird der Betrieb einer Komplettbatterie unter Verwendung des erfindungsgemäßen Elektrodenmaterials EM_Si2_80 und dem Elektrolyten EL1 getestet. Die Vollzelle wurde in einem auf 530 mA/g kapazitätslimierten Modus mit Zyklen mit 372 mA/g betrieben. Der zeitweise Abfall und das Wiederansteigen der Kapazität beruht auf der nachträglichen Anhebung des oberen Abschaltpotentials von 4,0 auf 4,2 V. Die Messung zeigt die Funktionsfähigkeit dieser Vollzelle bis über 50 Zyklen, mit relativ niedrigen irreversiblen Verlusten.

## Patentansprüche

1. Elektrodenmaterial für Lithium-Ionen-Batterien,
**dadurch gekennzeichnet,**
**dass** das Elektrodenmaterial
- 5 - 85 Gew.-% nanoskalige Siliziumpartikel, die eine BET-Oberfläche von 5 bis 700 m²/g und einen mittleren Primärpartikeldurchmesser von 5 bis 200 nm aufweisen,
- 0 - 10 Gew.-% Leitruß,
- 5 - 80 Gew.-% Graphit mit einem mittleren Partikeldurchmesser von 1 µm bis 100 µm und
- 5 - 25 Gew.-% eines Bindemittels
aufweist, wobei die Anteile der Komponenten in Summe maximal 100 Gew.% ergeben.

2. Elektrodenmaterial gemäß Anspruch 1,
**dadurch gekennzeichnet,**
**dass** das Elektrodenmaterial
- 65 - 86,5 Gew.-% nanoskalige Siliziumpartikel,
- 0,5 - 5 Gew.-% Leitruß,
- 8 - 20 Gew.-% Graphit mit einem mittleren Partikeldurchmesser von 2 µm bis 50 µm und
- 5 - 10 Gew.-% eines Bindemittels
aufweist.

3. Elektrodenmaterial gemäß Anspruch 1,
**dadurch gekennzeichnet,**
**dass** das Elektrodenmaterial
- 5 - 40 Gew.-% nanoskalige Siliziumpartikel,
- 55 - 85 Gew.-% Graphit mit einem mittleren Partikeldurchmesser von 2 µm bis 50 µm und
- 5 - 10 Gew.-% eines Bindemittels
aufweist.

4. Elektrodenmaterial gemäß zumindest einem der Ansprüche 1 bis 3,
**dadurch gekennzeichnet,**
**dass** die nanoskaligen Siliziumpartikel dotiert sind.

5. Elektrodenmaterial gemäß Anspruch 4,
**dadurch gekennzeichnet,**
**dass** die nanoskaligen Siliziumpartikel maximal 53 Gew.-% an Lithium als Dotierkomponente aufweisen.

6. Elektrodenmaterial gemäß zumindest einem der Ansprüche 1 bis 5,
**dadurch gekennzeichnet,**
**dass** die nanoskaligen Siliziumpartikel eine BET-Oberfläche von 6 bis 140 m²/g aufweisen.

7. Verwendung eines Elektrodenmaterials gemäß zumindest einem der Ansprüche 1 bis 6 zur Herstellung von Lithium-Ionen-Batterien.

8. Verwendung gemäß Anspruch 7,
**dadurch gekennzeichnet,**
**dass** als Elektrolyt eine Elektrolytzusammensetzung eingesetzt wird, die von 0,5 bis 10 Gew.-% Vinylencarbonat aufweist.

9. Verwendung gemäß Anspruch 7 oder 8,
**dadurch gekennzeichnet,**
**dass** als Elektrolyt eine Elektrolytzusammensetzung aus mindestens einem organischen Lösungsmittel und mindestens einem Alkali- oder Erdalkalimetallsalz eingesetzt wird.

10. Verwendung gemäß Anspruch 9,
**dadurch gekennzeichnet,**
**dass** als Elektrolyt eine Elektrolytzusammensetzung eingesetzt wird, die ein organisches Lösemittel, ausgewählt aus Ethylencarbonat, Dimethylcarbonat, Ethylmethylcarbonat, Diethylcarbonat, Propylencarbonat, Butylencarbonat, Methylpropylcarbonat, Butylmethylcarbonat und seine Isomere, 1,2-Dimethoxyethan, Tetrahydrofuran, 2-Methyltetrahydrofuran, Diethylenglycoldialkylester, Dioxolan, Propylenoxid, Dimethylsulfoxid, Dimethylformamid, Formamid, Nitromethan, gamma-Butyrolacton, Carbonsäurealkylester und/oder Methyllactat, aufweist.

11. Verwendung gemäß Anspruch 9 oder 10,
**dadurch gekennzeichnet,**
**dass** als Elektrolyt eine Elektrolytzusammensetzung eingesetzt wird, die ein Leitsalz, ausgewählt aus LiPF₆, LiClO₄, LiAsF₆, LiBF₄, LiCF₃SO₃, LiN(CF₃SO₂)₂, LiN(SO₂CF₂CF₃)₂, LiSbF₆, LiAlCl₄, LiGaCl₄, LiCl, LiNO₃, LiSCN, LiO₃SCF₂CF₃, LiC₆F₅SO₃, LiO₂CCF₃, LiFSO₃, LiB(C₆H₅)₄, LiB(C₂O₄)₂ und/oder Lithiumfluoroalkylphosphate.

12. Verwendung gemäß zumindest einem der Ansprüche 7 bis 11,
**dadurch gekennzeichnet,**
**dass** als Elektrolyt eine Elektrolytzusammensetzung eingesetzt wird, deren Konzentration des Leitsalzes von 0,5 mol/l bis zur Löslichkeitsgrenze des entsprechenden Salzes beträgt.

13. Lithium-Ionen-Batterie mit einer negativen Elektrode, die ein Elektrodenmaterial gemäß zumindest einem der Ansprüche 1 bis 6 aufweist.

## Claims

1. Electrode material for lithium ion batteries, **characterized in that** the electrode material comprises
- 5-85% by weight of nanoscale silicon particles which have a BET surface area of from 5 to 700 m²/g and a mean primary particle diameter of from 5 to 200 nm,
- 0-10% by weight of conductive carbon black,
- 5-80% by weight of graphite having a mean particle diameter of from 1 µm to 100 µm and
- 5-25% by weight of a binder,
the proportions of the components summing to not more than 100% by weight.

2. Electrode material according to Claim 1, **characterized in that** the electrode material comprises
- 65-86.5% by weight of nanoscale silicon particles,
- 0.5-5% by weight of conductive carbon black,
- 8-20% by weight of graphite having a mean particle diameter of from 2 µm to 50 µm and
- 5-10% by weight of a binder.

3. Electrode material according to Claim 1, **characterized in that** the electrode material comprises
- 5-40% by weight of nanoscale silicon particles,
- 55-85% by weight of graphite having a mean particle diameter of from 2 µm to 50 µm and
- 5-10% by weight of a binder.

4. Electrode material according to at least one of Claims 1 to 3, **characterized in that** the nanoscale silicon particles are doped.

5. Electrode material according to Claim 4, **characterized in that** the nanoscale silicon particles comprise not more than 53% by weight of lithium as a doping component.

6. Electrode material according to at least one of Claims 1 to 5, **characterized in that** the nanoscale silicon particles have a BET surface area of from 6 to 140 m²/g.

7. Use of an electrode material according to at least one of Claims 1 to 6 for the production of lithium ion batteries.

8. Use according to Claim 7, **characterized in that** an electrolyte composition which comprises from 0.5 to 10% by weight of vinylene carbonate is used as the electrolyte.

9. Use according to Claim 7 or 8, **characterized in that** an electrolyte composition comprising at least one organic solvent and at least one alkali metal salt or alkaline earth metal salt is used as the electrolyte.

10. Use according to Claim 9, **characterized in that** an electrolyte composition which comprises an organic solvent selected from ethylene carbonate, dimethyl carbonate, ethyl methyl carbonate, diethyl carbonate, propylene carbonate, butylene carbonate, methyl propyl carbonate, butyl methyl carbonate and its isomers, 1,2-dimethoxyethane, tetrahydrofuran, 2-methyltetrahydrofuran, diethylene glycol dialkyl ester, dioxolane, propylene oxide, dimethyl sulphoxide, dimethylformamide, formamide, nitromethane, gamma-butyrolactone, alkyl esters of carboxylic acids and/or methyl lactate is used as the electrolyte.

11. Use according to Claim 9 or 10, **characterized in that** an electrolyte composition which comprises a conductive salt selected from LiPF₆, LiClO₄, LiAsF₆, LiBF₄, LiCF₃SO₃, LiN(CF₃SO₂)₂, LiN(SO₂CF₂CF₃)₂, LiSbF₆, LiAlCl₄, LiGaCl₄, LiCl, LiNO₃, LiSCN, LiO₃SCF₂CF₃, LiC₆F₅SO₃, LiO₂CCF₃, LiFSO₃, LiB(C₆H₅)₄, LiB(C₂O₄)₂, and/or lithium fluoroalkylphosphates is used as the electrolyte.

12. Use according to at least one of Claims 7 to 11, **characterized in that** an electrolyte composition in which the concentration of the conductive salt is from 0.5 mol/l to the solubility limit of the corresponding salt is used as the electrolyte.

13. Lithium ion battery having a negative electrode which comprises an electrode material according to at least one of Claims 1 to 6.

## Revendications

1. Matériau d'électrode pour batteries au lithium-ion, **caractérisé en ce que** le matériau d'électrode présente :
- 5 à 85 % en poids de particules de silicium nanoscalaires ayant une surface BET de 5 à 700 m²/g et un diamètre moyen de particules primaires de 5 à 200 nm,
- 0 à 10 % en poids de noir conducteur,
- 5 à 80 % en poids de graphite avec un diamètre moyen de particule de 1 µm à 100 µm, et
- 5 à 25 % en poids d'un liant,
les parties des composants donnant en somme maximum 100 % en poids.

2. Matériau d'électrode selon la revendication 1, **caractérisé en ce que** le matériau d'électrode présente :
- 65 à 86,5 % en poids de particules de silicium nanoscalaires,
- 0,5 à 5 % en poids de noir conducteur,
- 8 à 20 % en poids de graphite avec un diamètre moyen de particule de 2 µm à 50 µm, et
- 5 à 10 % en poids d'un liant.

3. Matériau d'électrode selon la revendication 1, **caractérisé en ce que** le matériau d'électrode présente :
- 5 à 40 % en poids de particules de silicium nanoscalaire,
- 55 à 85 % en poids de graphite avec un diamètre moyen de particule de 2 µm à 50 µm, et
- 5 à 10 % en poids d'un liant.

4. Matériau d'électrode selon au moins une des revendications 1 à 3, **caractérisé en ce que** les particules de silicium nanoscalaires sont dopées.

5. Matériau d'électrode selon la revendication 4, **caractérisé en ce que** les particules de silicium nanoscalaires présentent au maximum 53 % en poids de lithium comme composant de dopage.

6. Matériau d'électrode selon au moins l'une des revendications 1 à 5, **caractérisé en ce que** les particules de silicium nanoscalaires présentent une surface BET de 6 à 140 m²/g.

7. Utilisation d'un matériau d'électrode selon au moins l'une des revendications 1 à 6 pour la fabrication de batteries au lithium-ion.

8. Utilisation selon la revendication 7, **caractérisée en ce qu'**on utilise comme électrolyte une composition d'électrolyte qui présente de 0,5 à 10 % en poids de carbonate de vinylène.

9. Utilisation selon la revendication 7 ou 8, **caractérisée en ce qu'**on utilise comme électrolyte une composition d'électrolyte constituée d'au moins un solvant organique et d'au moins un sel de métal alcalin ou alcalino-terreux.

10. Utilisation selon la revendication 9, **caractérisée en ce qu'**on utilise comme électrolyte une composition d'électrolyte qui présente un solvant organique choisi parmi les groupes éthylène carbonate, diméthylcarbonate, éthylméthylcarbonate, diéthylcarbonate, propylènecarbonate, butylènecarbonate, méthylpropylcarbonate, butylméthylcarbonate et ses isomères, 1,2-diméthoxyéthane, tétrahydrofurane, 2-méthyltétrahydrofurane, diéthylèneglycoldialkylester, dioxolane, oxyde de propylène, diméthylsulfoxyde, diméthylformamide, formamide, nitrométhane, gamma-butyrolactone, alkylester d'acide carboxylique et/ou méthyllactate.

11. Utilisation selon la revendication 9 ou 10, **caractérisée en ce qu'**on utilise comme électrolyte une composition d'électrolyte qui est un sel conducteur choisi parmi les LiPF₆, LiClO₄, LiAsF₆, LiBF₄, LiCF₃SO₃ , LiN(CF₃SO₂)₂, LiN(SO₂CF₂CF₃)₂, LiSbF₆, LiAlCl₄, LiGaCl₄, LiCl, LiNO₃, LiSCN, LiO₃SCF₂CF₃, LiC₆F₅SO₃, LiO₂CCF₃, LiFSO₃, LiB(C₆H₅)₄, LiB(C₂O₄)₂ et/ou fluoroalkylphosphates de lithium.

12. Utilisation selon au moins l'une des revendications 7 à 11, **caractérisée en ce qu'**on utilise comme électrolyte une composition d'électrolyte dont la concentration du sel conducteur va de 0,5 mole/l à la limite de solubilité du sel correspondant.

13. Batterie au lithium-ion avec une électrode négative qui présente un matériau d'électrode selon au moins l'une des revendications 1 à 6.
